# FASCICULE DE BREVET EUROPEEN

(11) **EP 3 377 335 B1**
(45) Date de publication et mention de la délivrance du brevet: **01.09.2021**
(21) Numéro de dépôt: 16809504.0
(22) Date de dépôt: 18.11.2016
(51) Int. Cl.: B60C 1/00, C08L 23/16

(54) **BANDE DE ROULEMENT POUR PNEUMATIQUE D'AVION**
LAUFFLÄCHE FÜR EINEN FLUGZEUGREIFEN
TREAD FOR AN AIRCRAFT TYRE

(30) Priorité: 19.11.2015 FR 1561130
(43) Date de publication de la demande: 26.09.2018
(73) Titulaire: Compagnie Générale des Etablissements Michelin, 63000 Clermont-Ferrand (FR)
(72) Inventeur: JOULIN, Emmanuel, 63030 Clermont-Ferrand Cedex 9 (FR); ARAUJO DA SILVA, José-Carlos, 63040 Clermont Ferrand Cedex 9 (FR)
(74) Mandataire: Millanvois, Patrick Jacques Jean
(86) Numéro de dépôt international: PCT/FR2016/053010
(87) Numéro de publication internationale: WO 2017/085422

(56) Documents cités:
- EP-A2- 1 800 905
- WO-A1-2004/009693
- WO-A1-2010/000747
- WO-A1-2016/012259
- WO-A1-2016/012261
- US-A- 4 006 767
- US-A- 4 192 366
- US-A1- 2004 127 616
- US-A1- 2006 041 071
- US-A1- 2018 215 905

## Description

La présente invention a pour objet un pneumatique pour avion, et, en particulier, la bande de roulement d'un pneumatique pour avion.

Un pneumatique pour avion est caractérisé par un usage à pression, charge et vitesse élevées. A titre d'exemple, un pneumatique pour avion de dimension 46x17R20, destiné à équiper un avion commercial, peut être utilisé à une pression égale à 15.3 bars, une charge statique égale à 21 tonnes et une vitesse maximale égale à 360 km/h. De façon générale, un pneumatique pour avion est utilisé à une pression supérieure à 9 bars et à un taux de flèche au moins égal à 32%. La pression d'utilisation est définie, par exemple, par la norme de la Tire and Rim Association (TRA). Le taux de flèche d'un pneumatique est, par définition, sa déformation radiale, ou sa variation de hauteur radiale, lorsque celui-ci passe d'un état gonflé non chargé à un état gonflé chargé en statique, dans les conditions de pression et de charge recommandées, par exemple, par la norme de la TRA. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le rebord de jante. Le diamètre extérieur du pneumatique est mesuré en statique dans un état non chargé gonflé à la pression recommandée.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Les expressions « radialement », « axialement » et « circonférentiellement » signifient respectivement « selon la direction radiale », « selon la direction axiale » et « selon la direction circonférentielle ».

La bande de roulement est la partie du pneumatique destinée à venir en contact avec le sol par l'intermédiaire d'une surface de roulement et s'étendant radialement depuis une surface de fond jusqu'à la surface de roulement, axialement depuis un premier bord jusqu'à un deuxième bord de bande de roulement définissant la largeur axiale de la bande de roulement, et circonférentiellement sur toute la périphérie du pneumatique. Par convention, la largeur axiale de la bande de roulement est définie comme la largeur de l'aire de contact entre la bande de roulement et le sol, mesuré selon la droite axiale passant par le centre de l'aire de contact, lorsque le pneumatique neuf est soumis aux conditions de charge et de pression recommandées par la norme de la TRA. La bande de roulement est généralement constituée d'éléments en relief séparés par des creux. Dans le cas d'un pneumatique pour avion, les éléments en relief sont le plus souvent des nervures circonférentielles continues sur toute la circonférence du pneumatique et séparées par des creux ou sillons circonférentiels. La bande de roulement, qui est la partie usante du pneumatique, comprend au moins une composition de caoutchouc, le plus souvent à base de caoutchouc naturel et de noir de carbone, ces deux éléments principaux conférant à la composition de caoutchouc les propriétés mécaniques nécessaires aux conditions d'usage d'un pneumatique pour avion. En plus de ces éléments principaux, une telle composition de caoutchouc comprend classiquement un système de vulcanisation et des agents de protection.

Radialement à l'intérieur de la bande de roulement, un pneumatique de type radial comprend une armature de renforcement, constituée d'une armature de sommet et d'une armature de carcasse radiale radialement intérieure à l'armature de sommet. L'armature de sommet comprend au moins une couche de sommet constituée par des éléments de renforcement ou renforts enrobés par un mélange élastomérique et parallèles entre eux. L'armature de carcasse radiale comprend au moins une couche de carcasse constituée par des renforts enrobés par un mélange élastomérique, parallèles entre eux et orientés sensiblement radialement, c'est-à-dire formant, avec la direction circonférentielle, un angle compris entre 85° et 95°. Les renforts des couches de sommet et de carcasse, pour les pneumatiques d'avion, sont le plus souvent des renforts textiles, en polyamide aliphatique, tel que le nylon, en polyamide aromatique, tel que l'aramide, ou en matériau hybride combinant, par exemple, un polyamide aliphatique et un polyamide aromatique.

Sur les pneumatiques pour avion, il a été constaté la présence d'une usure non uniforme de la bande de roulement, appelée usure irrégulière, résultant des sollicitations au cours des différentes phases de vie du pneumatique: décollage, roulage et atterrissage. Il a été plus particulièrement mis en évidence une usure différentielle de la bande roulement entre une partie médiane et les deux parties latérales de la bande de roulement, axialement extérieures à la partie médiane, l'usure de cette partie médiane étant plus importante. L'usure différentielle de la partie médiane de la bande de roulement entraîne une limitation de la durée de vie du pneumatique, donc de son utilisation et son retrait prématuré, bien que la bande de roulement ne présente généralement qu'une relativement faible usure des parties latérales de la bande de roulement : ce qui est pénalisant sur le plan économique.

L'homme du métier a mis en évidence deux types d'usure selon la phase de vie du pneumatique. A l'atterrissage, la partie médiane de la bande de roulement, ayant une largeur axiale au moins égale à 50% et au plus égale à 80% de la largeur axiale totale de la bande de roulement et entrant en contact avec le sol, est soumise à une usure appelée « usure toucher », résultant d'un important échauffement thermique, au moment de l'entrée en contact de la surface de roulement avec le sol, en raison du différentiel de vitesses entre la vitesse de rotation du pneumatique et la vitesse de l'avion. En phase de roulage au sol ou « phase taxi », avant le décollage ou après l'atterrissage, les parties latérales de la bande roulement, positionnées axialement de part et d'autre de la partie médiane et ayant chacune une largeur axiale au moins égale à 10% et au plus égale à 25% de la largeur axiale totale de la bande de roulement, sont soumises à une usure appelée « usure taxi », résultant des efforts freineurs exercés sur ces parties latérales du fait de leur vitesse de rotation supérieure à celle de la partie médiane. Ainsi la bande de roulement est principalement usée au niveau de sa partie médiane, à l'atterrissage, et au niveau de ses parties latérales, en phase taxi.

Pour résoudre le problème d'usure irrégulière spécifique aux pneumatiques pour avion, l'homme du métier a cherché, selon une première voie d'action, à optimiser le profil méridien gonflé de la surface de roulement, ce profil méridien étant la coupe méridienne de la surface de roulement d'un pneumatique neuf gonflé à sa pression nominale et non chargé, sans prise en compte des sillons circonférentiels. Optimiser ce profil méridien gonflé, c'est-à-dire sa forme géométrique, permet d'optimiser la forme géométrique de la surface de contact du pneumatique avec le sol et, par conséquent, la répartition des contraintes mécaniques dans cette surface de contact et donc d'agir sur l'usure de la bande de roulement. Par exemple, les documents EP 1163120, EP 1381525, EP 1477333 et EP 2310213 décrivent des solutions visant une optimisation du profil gonflé de la surface de roulement, en agissant sur les rigidités d'extension des couches de sommet et/ou de carcasse, ou sur des différentiels de rigidités d'extension entre la partie médiane et les parties latérales des couches de sommet, ou encore sur un profil optimisé de couche de sommet avec une partie médiane concave. Toutes ces solutions sont basées sur des évolutions de matériau et/ou de géométrie des couches de sommet.

Une autre voie d'action sur l'usure d'un pneumatique pour avion est l'optimisation de la ou des compositions de caoutchouc constitutives de la bande de roulement. En effet l'usure dépend également de la ou des compositions de caoutchouc constitutives de la bande de roulement et de leur sensibilité à l'abrasion, caractérisées en particulier par leur cohésion, la cohésion dépendant de la composition chimique.

Les inventeurs se sont donnés pour objectif, par rapport à un pneumatique d'avion de l'état de la technique, d'augmenter la résistance à l'usure toucher de la partie médiane de la bande de roulement, lors des phases d'atterrissage, tout en garantissant au moins le même niveau de résistance à l'usure taxi des parties latérales de la bande de roulement, lors des phases taxi, en agissant sur les compositions de caoutchouc des diverses parties de la bande de roulement.

Cet objectif a été atteint, selon l'invention, par un pneumatique pour avion comprenant une bande de roulement ayant une largeur axiale L, la bande de roulement comprenant :
- une partie médiane ayant une largeur axiale L_{C} au moins égale à 50% et au plus égale à 80% de la largeur axiale L de la bande de roulement et constituée par une composition de caoutchouc médiane,
- et deux parties latérales, positionnées axialement de part et d'autre de la partie médiane, ayant chacune une largeur axiale au moins égale à 10% et au plus égale à 25% de la largeur axiale L de la bande de roulement et constituées chacune par une composition de caoutchouc latérale,
- la composition de caoutchouc médiane comprenant au moins 50 pce d'un premier élastomère diénique de partie médiane, au plus 70 pce d'une charge renforçante de partie médiane et un système de réticulation, lequel premier élastomère diénique de partie médiane est un terpolymère d'éthylène, d'une α-oléfine et d'un diène non conjugué,
- et la composition de caoutchouc latérale de chaque partie latérale comprenant au moins 50 pce d'un premier élastomère diénique de partie latérale, un taux de charge renforçante de partie latérale supérieur au taux de charge renforcante de partie médiane et un système de réticulation, lequel premier élastomère diénique de partie latérale est un terpolymère d'éthylène, d'une α-oléfine et d'un diène non conjugué.

Il est à noter que les parties latérales de la bande de roulement peuvent avoir des largeurs axiales différentes et/ou ont des compositions de caoutchouc latérales différentes, même si, préférentiellement, les largeurs axiales des parties latérales sont identiques et si leurs compositions de caoutchouc latérales sont également identiques.

Une teneur en masse ou taux d'un premier élastomère diénique au moins égale à 50 pce (50 parties pour cent parties d'élastomère) signifie que ce premier élastomère diénique est l'élastomère majoritaire dans la composition de caoutchouc. Le taux de premier élastomère diénique est donc majoritaire dans la composition de caoutchouc médiane et dans chaque composition de caoutchouc latérale, mais ce taux peut différer d'une composition de caoutchouc à l'autre.

Pour la partie médiane, le taux de premier élastomère diénique de partie médiane majoritaire est associé à un taux de charge renforçante de partie médiane au plus égal à 70 pce. Ceci confère à la composition de caoutchouc médiane une meilleure résistance à l'usure toucher de la partie médiane de la bande de roulement.

Pour chaque partie latérale, le taux de premier élastomère diénique de partie latérale majoritaire est associé à un taux de charge renforçante de partie latérale supérieur au taux de charge renforçante de partie médiane. Ceci confère à chaque composition de caoutchouc latérale une bonne résistance à l'usure taxi de chaque partie latérale de la bande de roulement.

Ainsi, la différenciation du taux de charge renforçante entre la partie médiane et les parties latérales, constituées chacune par une composition de caoutchouc avec un taux de premier élastomère diénique selon l'invention majoritaire, permet de garantir un compromis satisfaisant entre la résistance à l'usure toucher de la partie médiane et la résistance à l'usure taxi des parties latérales.

Préférentiellement, la composition de caoutchouc médiane comprend au moins 60 pce d'un premier élastomère diénique de partie médiane.

Encore préférentiellement, au moins une composition de caoutchouc latérale comprend au moins 60 pce d'un premier élastomère diénique de partie latérale.

L'a-oléfine utilisée pour la synthèse du terpolymère (ou du premier élastomère diénique) de la composition de caoutchouc médiane ou latérale peut être un mélange d'alpha oléfines. L'a-oléfine comprend généralement 3 à 16 atomes de carbone. Conviennent comme α-oléfine par exemple le propylène, le 1-butène, le 1-pentène, le 1-hexène, le 1-octène et le 1-dodécène.

Avantageusement, pour l'un au moins des premiers élastomères diéniques respectivement de partie médiane et de partie latérale, l'a-oléfine est le propylène, auquel cas le terpolymère est appelé communément un EPDM (ethylene propylene diene monomer), désigné en anglais par « EPDM rubber ».

Le diène non conjugué utilisé pour la synthèse du terpolymère (ou du premier élastomère diénique) de la composition de caoutchouc médiane ou latérale comprend généralement 6 à 12 atomes de carbone. A titre d'exemple de diène non conjugué, on peut citer le dicyclopentadiène, le 1,4-hexadiène, le 5-éthylidène-2-norbornène, le 5-méthylène-2-norbornène, le 1,5-cyclooctadiène.

Avantageusement, pour l'un au moins des premiers élastomères diéniques respectivement de partie médiane et de partie latérale, le diène non conjugué est le 5-éthylidène-2-norbornène ou le dicyclopentadiène.

Selon un mode de réalisation de l'invention, l'un au moins des premiers élastomères diéniques respectivement de partie médiane et de partie latérale présente au moins l'une des caractéristiques suivantes, de préférence toutes:
- les unités éthylène représentent entre 20 et 90%, préférentiellement entre 30 et 70% en masse du premier élastomère diénique,
- les unités α-oléfine représentent entre 10 et 80%, préférentiellement de 15 à 70% en masse du premier élastomère diénique,
- les unités diène non conjugué représentent entre 0.5 et 20% en masse du premier élastomère diénique.

Il est entendu que le premier élastomère diénique de partie médiane ou de partie latérale peut être constitué par un mélange de terpolymères d'éthylène, α-oléfine et de diène non conjugué qui se différencient des uns des autres par leur macrostructure ou leur microstructure, en particulier par le taux massique respectif des unités éthylène, α-oléfine et diène non conjugué.

Selon un mode de réalisation particulier de l'invention, l'un au moins des premiers élastomères diéniques respectivement de partie médiane et de partie latérale est le seul élastomère de la composition de caoutchouc respectivement de partie médiane et de partie latérale.

Selon un autre mode de réalisation particulier de l'invention, au moins une des compositions de caoutchouc médiane ou latérale comprend un second élastomère, de préférence diénique c'est-à-dire comprenant des unités monomères diéniques, de partie médiane ou de partie latérale. Lorsque la composition de caoutchouc comprend un second élastomère, elle comprend de préférence plus de 50 pce, de manière plus préférentielle plus de 60 pce du premier élastomère diénique.

Le deuxième élastomère de la composition de caoutchouc médiane ou latérale peut être un élastomère diénique "essentiellement insaturé" ou "essentiellement saturé". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

De préférence le second élastomère de partie médiane ou de partie latérale est un élastomère diénique fortement insaturé choisi dans le groupe constitué par les polybutadiènes, les polyisoprènes, les copolymères de butadiène, les copolymères d'isoprène et les mélanges de ces élastomères.

Les polyisoprènes peuvent être de synthèse (IR) ou le caoutchouc naturel (NR). Il est entendu que le second élastomère diénique peut être constitué par un mélange d'élastomères diéniques qui se différencient des uns des autres par leur microstructure, par leur macrostructure ou par la présence d'une fonction, par la nature ou la position de cette dernière sur la chaîne élastomère.

La charge renforçante, connue pour ses capacités à renforcer une composition de caoutchouc utilisable pour la fabrication de pneumatiques, peut être un noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Avantageusement la charge renforçante d'au moins une des compositions de caoutchouc médiane ou latérale comprend un noir de carbone.

Le noir de carbone présente une surface spécifique BET de préférence d'au moins 90 m²/g, de manière plus préférentielle d'au moins 100 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. Les noirs de carbone peuvent être utilisés à l'état isolé, tels que disponibles commercialement, ou sous tout autre forme, par exemple comme support de certains des additifs de caoutchouterie utilisés. La surface spécifique BET des noirs de carbone est mesurée selon la norme D6556-10 [méthode multipoints (au minimum 5 points) - gaz : azote - domaine de pression relative P/P0 : 0.1 à 0.3].

Selon un mode de réalisation particulier de l'invention, la charge renforçante d'au moins une des compositions de caoutchouc médiane ou latérale comprend 100% en masse d'un noir de carbone.

Selon un autre mode de réalisation de l'invention, la charge renforçante d'au moins une des compositions de caoutchouc médiane ou latérale comprend une charge inorganique, de préférence une silice.

Par "charge inorganique renforçante", on entend toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique; une telle charge se caractérise généralement, de manière connue, par la présence de groupes hydroxyle (-OH) à sa surface.

Comme charges inorganiques renforçantes conviennent notamment des charges minérales du type siliceux, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Avantageusement la composition de caoutchouc médiane comprend un taux de charge renforçante de partie médiane au plus égale à 50 pce.

Encore avantageusement la composition de caoutchouc médiane comprend un taux de charge renforçante de partie médiane au moins égale à 20 pce, de préférence au moins égale à 25 pce.

En particulier une composition de caoutchouc médiane comprenant un élastomère diénique, avec un taux de charge renforçante préférentiellement au moins égal à 25 pce et au plus égal à 50 pce, permet d'améliorer la résistance à l'usure toucher, lors des atterrissages, sans dégrader la résistance à l'usure taxi, lors des phases de roulage.

Le système de réticulation de toute composition de caoutchouc médiane ou latérale peut être à base soit de soufre, soit de donneurs de soufre et/ou de peroxyde et/ou de bismaléimides. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

Toute composition de caoutchouc médiane ou latérale peut comporter également tout ou partie des additifs usuels habituellement utilisés dans les compositions d'élastomères destinées à constituer des bandes de roulement, comme par exemple des plastifiants, des pigments, des agents de protection tels que des cires anti-ozone, des anti-ozonants chimiques, anti-oxydants, des agents anti-fatigue.

Avantageusement, au moins une des compositions de caoutchouc médiane ou latérale comprend 0 à 20 pce d'un plastifiant liquide.

Un plastifiant est considéré comme liquide lorsque, à 23°C, il a la capacité de prendre à terme la forme de son contenant, cette définition étant donnée par opposition aux résines plastifiantes qui sont par nature solides à température ambiante. Comme plastifiant liquide, on peut citer les huiles végétales, les huiles minérales, les plastifiants éthers, esters, phosphates, sulfonates et leurs mélanges.

Préférentiellement le taux de plastifiant liquide d'au moins une des compositions de caoutchouc médiane ou latérale est égal à 0.

Le plus souvent, les deux parties latérales, positionnées axialement de part et d'autre de la partie médiane, ont des largeurs axiales identiques. Avantageusement, les deux parties latérales sont constituées par des compositions de caoutchouc latérales identiques. Selon un mode de réalisation préféré, les deux parties latérales, positionnées axialement de part et d'autre de la partie médiane ont des largeurs axiales identiques et sont constituées par des compositions de caoutchouc latérales identiques.

Le pneumatique comprenant une armature de sommet radialement intérieure à la bande de roulement, le pneumatique comprend avantageusement une couche intercalaire constituée par une composition de caoutchouc en contact par une face radialement extérieure avec toute la largeur de la bande de roulement et par une face radialement intérieure avec l'armature de sommet. Un contact de la face radialement extérieure de la couche intercalaire avec toute la bande de roulement signifie que la largeur axiale de ce contact est sensiblement égale à la largeur axiale L de la bande de roulement. Un contact de la face radialement intérieure de la couche intercalaire avec l'armature de sommet est un contact avec l'armature de protection, qui est la partie de l'armature de sommet la plus radialement extérieure destinée à protéger l'armature de travail, qui est la partie de l'armature de sommet la plus radialement intérieure. Cette couche intercalaire, appelée également couche de liaison, garantit une meilleure liaison entre la bande de roulement comprenant une composition de caoutchouc selon l'invention et l'armature de sommet.

Selon un premier mode de réalisation, la couche intercalaire est constituée par une composition de caoutchouc comprenant du caoutchouc naturel. La composition de caoutchouc comprend également une charge renforçante et un système de réticulation.

Selon un deuxième mode de réalisation, la couche intercalaire est constituée par une composition de caoutchouc comprenant une matrice élastomère, laquelle matrice élastomère contient un élastomère terpolymère d'éthylène, d'une α-oléfine et d'un diène non conjugué et contient au moins 10% en masse d'unité diénique. On appelle matrice élastomère l'ensemble des élastomères contenus dans la composition de caoutchouc. La composition de caoutchouc comprend également une charge renforçante et un système de réticulation. Il est entendu que l'élastomère peut être un mélange de terpolymères d'éthylène, d'a-oléfine et de diène non conjugué qui se différencient des uns des autres par leur macrostructure ou leur microstructure, en particulier par le taux massique respectif des unités éthylène, α-oléfine et diène non conjugué. On entend par unité diénique une unité monomère issue de l'insertion d'un motif monomère résultant de la polymérisation d'un monomère diène conjugué ou d'un monomère diène non conjugué, l'unité diénique comportant une double liaison carbone carbone. La composition de caoutchouc de la couche intercalaire, selon ce deuxième mode de réalisation, peut être utilisée sous sa forme générique, telle que décrite précédemment, ou sous la forme de l'un quelconque de ses modes de réalisation, décrits dans le document FR 14/61754.

Selon un troisième mode de réalisation, la couche intercalaire est constituée par une composition de caoutchouc comprenant un élastomère comprenant des unités éthylène et des unités diéniques comportant une double liaison carbone-carbone, lesquelles unités sont distribuées statistiquement au sein de l'élastomère. La composition de caoutchouc comprend également une charge renforçante et un système de réticulation. La composition de caoutchouc de la couche intercalaire, selon ce troisième mode de réalisation, peut être utilisée sous sa forme générique, telle que décrite précédemment, ou sous la forme de l'un quelconque de ses modes de réalisation, décrits dans le document FR 14/61755.

Selon un quatrième mode de réalisation, la couche intercalaire est constituée par un stratifié élastomère, comprenant radialement de l'extérieur vers l'intérieur, n couches Ci, n étant un nombre entier supérieur ou égal à 2 et i étant un nombre entier allant de 1 à n, constituées chacune par une composition de caoutchouc diénique, la couche C1 comprenant un élastomère diénique E comprenant des unités éthylène et des unités diéniques, les unités diéniques représentant plus de 10% en masse des unités monomères de l'élastomère diénique E, la couche Cn comprenant de 50 à moins de 100 pce d'un élastomère diénique N ayant un taux massique d'unité diénique supérieur à 50%, le taux exprimé en pce d'élastomère diénique N étant plus élevé dans la couche Cn que dans la couche C1, le taux exprimé en pce d'élastomère diénique E étant plus élevé dans la couche C1 que dans la couche Cn, les couches Ci, pour les valeurs de i allant de 2 à n-1 pour n supérieur à 2, comprenant un élastomère diénique I choisi dans le groupe constitué par les homopolymères et les copolymères de diène présentant plus de 10% en masse d'unité diénique. Les compositions de caoutchouc comprennent également une charge renforçante et un système de réticulation. Les compositions de caoutchouc de la couche intercalaire, selon ce quatrième mode de réalisation, peuvent être utilisées sous leurs formes génériques, telle que décrites précédemment, ou sous la forme de l'un quelconque de leurs modes de réalisation respectifs, décrits dans le document FR 14/62227.

De façon générale, concernant la composition des élastomères, la microstructure est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500 MHz à des fréquences de 500.43 MHz pour l'observation du proton et 125.83 MHz pour l'observation du carbone. Pour les mesures sur des mélanges ou des élastomères non solubles mais ayant la capacité de gonfler dans un solvant, est utilisée une sonde HRMAS 4 mm z-grad permettant d'observer le proton et le carbone en mode découplé du proton. Les spectres sont acquis à des vitesses de rotation de 4000 Hz à 5000 Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Les séquences respectivement utilisées pour la RMN du proton et la RMN du carbone sont identiques pour un échantillon soluble et un échantillon gonflé. Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

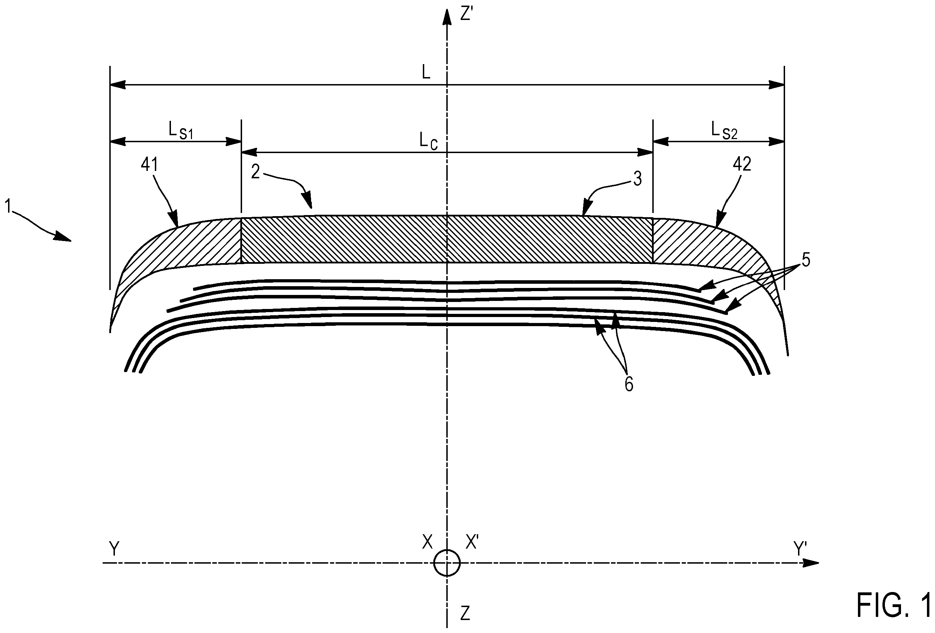

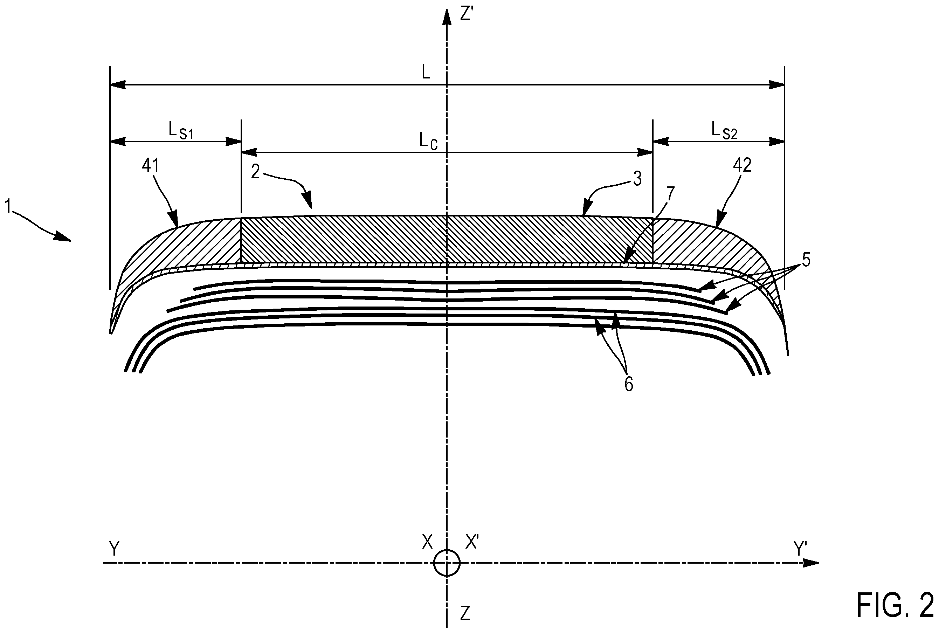

Les caractéristiques de l'invention seront mieux comprises à l'aide des figures 1 et 2, des résultats de mesures et de tests réalisés sur des compositions de caoutchouc telles qu'utilisées dans un pneumatique selon l'invention.

La figure 1, non représentée à l'échelle pour en faciliter la compréhension présente une vue en coupe dans un plan méridien du sommet d'un pneumatique pour avion selon l'invention, comprenant radialement de l'extérieur vers l'intérieur une bande de roulement 2, une armature de sommet 5 et une armature de carcasse 6. La bande de roulement 2 ayant une largeur axiale L comprend une partie médiane 3, ayant une largeur axiale L_{C} au moins égale à 50% et au plus égale à 80% de la largeur axiale L de la bande de roulement et constituée par une composition de caoutchouc médiane, et deux parties latérales (41, 42), positionnées axialement de part et d'autre de la partie médiane 3, ayant chacune une largeur axiale (L_{S1}, L_{S2}) au moins égale à 10% et au plus égale à 25% de la largeur axiale L de la bande de roulement et constituées chacune par une composition de caoutchouc latérale.

La figure 2 présente une vue en coupe dans un plan méridien du sommet d'un pneumatique pour avion selon un mode de réalisation particulier de l'invention, dans lequel le pneumatique 1 comprend également une couche intercalaire 7 constituée par une composition de caoutchouc en contact par une face radialement extérieure avec la bande de roulement 2 et par une face radialement intérieure avec l'armature de sommet 5.

L'invention a été plus particulièrement étudiée dans le cas d'un pneumatique d'avion de dimension 46x17R20, destiné à équiper le train d'atterrissage principal d'un avion de ligne. Pour un tel pneumatique, la pression de gonflage est 15,3 bars, la charge statique 21 tonnes et la vitesse maximale 360 km/h.

Des mesures et des tests de laboratoire ont été réalisés sur différentes compositions de caoutchouc comprenant un élastomère diénique terpolymère d'éthylène, d'une α-oléfine et d'un diène non conjugué, en comparaison avec des compositions de caoutchouc à base de caoutchouc naturel généralement utilisées dans les bandes de roulement des pneumatiques pour avion de l'état de la technique.

Les compositions de caoutchouc selon l'invention et de l'état de la technique ont été préparées selon le procédé décrit ci-après. On introduit dans un mélangeur interne (taux de remplissage final : environ 70% en volume), dont la température initiale de cuve est d'environ 80°C, successivement les élastomères diéniques, les charges renforçantes, ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 70 °C, en mélangeant le tout (phase productive) pendant un temps approprié (par exemple une dizaine de minutes). Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement de pneumatique avion.

L'évaluation de la résistance à l'usure des compositions de caoutchouc précédemment définies a été évaluée, sur des échantillons, en particulier par un test d'abrasion à haute vitesse, représentatif des conditions d'atterrissage d'un pneumatique pour avion, associé à une mesure de perte de masse et par une mesure de la résistance à la rupture.

Concernant la perte de masse, un échantillon de composition de caoutchouc est soumis à un test d'abrasion sur un abrasimètre à haute vitesse. Le test d'abrasion à haute vitesse est réalisé selon le principe décrit dans l'article de S. K. Clark « Touchdown dynamics », Précision Measurement Company, Ann Arbor, MI, NASA, Langley Research Center, Computational Modeling of Tires pages 9-19 publié en août 1995. Le matériau de bande de roulement frotte sur une surface telle qu'un disque Norton Vulcan A30S-BF42. La vitesse linéaire lors du contact est de 70 m/s avec une pression moyenne de contact de 15 à 20 bars. Le dispositif est conçu pour frotter jusqu'à épuisement d'une l'énergie de 10 à 20 MJ/m² de surface de contact. La performance en perte de masse est évaluée sur la base de la perte de masse selon la formule suivante : Performance perte de masse = perte de masse témoin / perte de masse échantillon. Les résultats sont exprimés en base 100. Une performance en perte de masse pour l'échantillon supérieure à 100 est considérée comme meilleure que le témoin.

Dans les tableaux 1 et 2 présentés ci-après, les compositions de caoutchouc T1 et T2 sont deux compositions de caoutchouc de l'état de la technique prises en référence. La composition de caoutchouc T1 correspond à une composition à base de caoutchouc naturel, souvent utilisée par l'homme du métier pour fabriquer une bande de roulement de pneumatique pour avion. La composition de caoutchouc T2 contient également du caoutchouc naturel, mais avec un taux de charge et un système de vulcanisation différents de ceux de la composition de caoutchouc T1.

Les compositions de caoutchouc C1 à C5, C15, C18 à C24 contiennent un élastomère diénique EPDM, une charge renforçante comprenant un noir de carbone et/ou une silice à différents taux, et un système de réticulation. Elles diffèrent par le taux d'élastomère diénique EPDM et par la nature et le taux de charge renforçante (noir de carbone ou silice).

Un premier essai, dont les résultats sont présentés dans le tableau 1 ci-dessous, a pour but de montrer l'influence du taux d'élastomère diénique EPDM dans la composition de caoutchouc sur l'allongement à la rupture et la perte de masse.

**Tableau 1**

| | T2 | C1 | C2 | C3 | C4 | C5 |
|---|---|---|---|---|---|---|
| NR (1) | 100 | - | 10 | 20 | 40 | 60 |
| EPDM 1 (2) | - | 100 | 90 | 80 | 60 | 40 |
| Noir de carbone (3) | 30 | 30 | 30 | 30 | 30 | 30 |
| Antioxydant (4) | 1,5 | 1,5 | 1,5 | 1,5 | 1,5 | 1,5 |
| Acide stéarique (5) | 2,5 | 2,5 | 2,5 | 2,5 | 2,5 | 2,5 |
| Oxyde de Zinc (6) | 3 | 3 | 3 | 3 | 3 | 3 |
| Accélérateur (7) | 2 | 2 | 2 | 2 | 2 | 2 |
| Soufre | 0,8 | 0,8 | 0,8 | 0,8 | 0,8 | 0,8 |
| Allongement à la rupture à 23°C (%) | 528 | 634 | 664 | 658 | 560 | 465 |
| Performance en perte de masse (%) | 100 | 173 | 146 | 132 | 123 | 119 |

| | | | | | | |
|---|---|---|---|---|---|---|
| (1) Caoutchouc naturel (2) EPDM Nordel IP 4570 de la Société Dow (3) Noir de carbone de grade N234 selon la norme ASTM D-1765 (4) N-1,3-diméthylbutyl-N-phénylparaphénylènediamine « Santoflex 6-PPD » de la société Flexsys (5) Stéarine « Pristerene 4931 » de la société Uniqema (6) Oxyde de zinc de grade industriel de la société Umicore (7) N-cyclohexyl-2-benzothiazyle sulfénamide « Santocure CBS » de la société Flexsys | | | | | | |

Le résultat de ce premier essai montre que la performance en perte de masse des compositions de caoutchouc C1 à C5 est toujours améliorée par rapport à celle de la composition de caoutchouc T2 de référence. En d'autres termes, les pertes de masse pour les compositions de caoutchouc C1 à C5 sont toujours inférieures à celle de la composition de caoutchouc T2, l'cart de performance en perte de masse pouvant atteindre +73% dans le cas de la composition de caoutchouc C1 comprenant 100% d'EPDM. Concernant l'allongement à la rupture, celui-ci est supérieur à la référence pour les compositions de caoutchouc C1 à C4, mais devient inférieur à la référence pour la composition de caoutchouc C5 dans laquelle le taux d'EPDM est inférieur à 50 pce. On observe que l'utilisation de plus de 50 pce d'EPDM dans la composition de caoutchouc conduit à un meilleur compromis de performance entre la perte de masse et l'allongement rupture. Ainsi l'invention a pour avantage de garantir une meilleure performance en perte de masse, représentative d'une meilleure résistance à l'usure lors de la phase d'atterrissage de l'avion.

Un deuxième essai, dont les résultats sont présentés dans le tableau 2 ci-dessous, a pour but de montrer l'influence de la nature et du taux de charge renforçante dans la composition de caoutchouc sur la perte de masse.

**Tableau 2**

| | T1 | C1 | C15 | C18 | C19 | C20 | C21 | C22 | C23 | C24 |
|---|---|---|---|---|---|---|---|---|---|---|
| NR (1) | 100 | - | - | - | - | - | - | - | - | - |
| EPDM (2) | - | 100 | 100 | 100 | 100 | 100 | 100 | 100 | 100 | 100 |
| Noir de carbone 1 (3) | 47,5 | 30 | 47,5 | 70 | - | - | - | - | - | - |
| Noir de carbone 2 (4) | - | - | - | - | 30 | 47,5 | - | - | - | - |
| Noir de carbone 3 (5) | - | - | - | - | - | - | 30 | 47,5 | - | - |
| Silice (6) | - | - | - | - | - | - | - | - | 30 | 47,5 |
| Silane (7) | - | - | - | - | - | - | - | - | 2,4 | 3,8 |
| Antioxydant (8) | 1,5 | 1,5 | 1,5 | 1,5 | 1,5 | 1,5 | 1,5 | 1,5 | 1,5 | 1,5 |
| Acide stéarique (9) | 2,5 | 2,5 | 2,5 | 2,5 | 2,5 | 2,5 | 2,5 | 2,5 | 2,5 | 2,5 |
| Oxyde de Zinc (10) | 3 | 3 | 3 | 3 | 3 | 3 | 3 | 3 | 3 | 3 |
| Accélérateur (11) | 0,8 | 2 | 2 | 2 | 2 | 2 | 2 | 2 | 0,8 | 0,8 |
| Soufre | 1,5 | 0,8 | 0,8 | 0,8 | 0,8 | 0,8 | 0,8 | 0,8 | 1,5 | 1,5 |
| Performance en perte de masse (%) | 100 | 195 | 149 | 112 | 184 | 151 | 182 | 153 | 157 | 126 |

| | | | | | | | | | | |
|---|---|---|---|---|---|---|---|---|---|---|
| (1) Caoutchouc naturel (2) EPDM « Nordel IP 4570 » de la Société Dow (3) Noir de carbone de grade N234 selon la norme ASTM D-1765 (4) Noir de carbone de grade N115 selon la norme ASTM D-1765 (5) Noir de carbone de grade N550 selon la norme ASTM D-1765 (6) Silice de grade 160MP (7) Silane liquide « Si69 » de la société Dégussa (8) N-1,3-diméthylbutyl-N-phénylparaphénylènediamine « Santoflex 6-PPD » de la société Flexsys (9) Stéarine « Pristerene 4931 » de la société Uniqema (10) Oxyde de zinc de grade industriel de la société Umicore (11) N-cyclohexyl-2-benzothiazyle sulfénamide « Santocure CBS » de la société Flexsys | | | | | | | | | | |

Le résultat de ce deuxième essai montre que la performance perte de masse pour les compositions de caoutchouc selon l'invention C1, C15, C18 à C24 est toujours améliorée par rapport la composition de caoutchouc T1 de référence. On observe aussi que le noir de carbone, notamment à un taux inférieur à 70 pce, conduit à un meilleur résultat que la silice.

En résumé, les compositions de caoutchouc à base d'au moins un terpolymère d'éthylène, d'une α-oléfine et d'un diène non conjugué, une charge renforçante et un système de réticulation, constitutives de la partie médiane de la bande de roulement d'un pneumatique pour avion, confèrent au pneumatique une performance de résistance à l'usure toucher, lors de l'atterrissage, fortement améliorée.

## Revendications

1. Pneumatique (1) pour avion comprenant une bande de roulement (2) ayant une largeur axiale L, la bande de roulement (2) comprenant :
- une partie médiane (3) ayant une largeur axiale L_{C} au moins égale à 50% et au plus égale à 80% de la largeur axiale L de la bande de roulement et constituée par une composition de caoutchouc médiane,
- et deux parties latérales (41, 42), positionnées axialement de part et d'autre de la partie médiane (3), ayant chacune une largeur axiale (L_{S1}, L_{S2}) au moins égale à 10% et au plus égale à 25% de la largeur axiale L de la bande de roulement et constituées chacune par une composition de caoutchouc latérale,
**caractérisé en ce que** la composition de caoutchouc médiane comprend au moins 50 pce d'un premier élastomère diénique de partie médiane, au plus 70 pce d'une charge renforçante de partie médiane et un système de réticulation, lequel premier élastomère diénique de partie médiane est un terpolymère d'éthylène, d'une α-oléfine et d'un diène non conjugué **et en ce que** la composition de caoutchouc latérale de chaque partie latérale comprend au moins 50 pce d'un premier élastomère diénique de partie latérale, un taux de charge renforçante de partie latérale supérieur au taux de charge renforcante de partie médiane et un système de réticulation, lequel premier élastomère diénique de partie latérale est un terpolymère d'éthylène, d'une α-oléfine et d'un diène non conjugué.

2. Pneumatique (1) selon la revendication 1 **dans lequel** la composition de caoutchouc médiane comprend au moins 60 pce d'un premier élastomère diénique de partie médiane.

3. Pneumatique (1) selon l'une quelconque des revendications 1 ou 2 **dans lequel** au moins une composition de caoutchouc latérale comprend au moins 60 pce d'un premier élastomère diénique de partie latérale.

4. Pneumatique (1) selon l'une quelconque des revendications 1 à 3 **dans lequel,** pour l'un au moins des premiers élastomères diéniques respectivement de partie médiane et de partie latérale, l'a-oléfine est le propylène.

5. Pneumatique (1) selon l'une quelconque des revendications 1 à 4 **dans lequel,** pour l'un au moins des premiers élastomères diéniques respectivement de partie médiane et de partie latérale, le diène non conjugué est le 5-éthylidène-2-norbornène ou le dicyclopentadiène.

6. Pneumatique (1) selon l'une quelconque des revendications 1 à 5 **dans lequel** l'un au moins des premiers élastomères diéniques respectivement de partie médiane et de partie latérale présente au moins l'une des caractéristiques suivantes, de préférence toutes:
- les unités éthylène représentent entre 20 et 90%,
- les unités α-oléfine représentent entre 10 et 80%,
- les unités diène non conjugué représentent entre 0.5 et 20% en masse du premier élastomère diénique.

7. Pneumatique (1) selon l'une quelconque des revendications 1 à 6 **dans lequel** l'un au moins des premiers élastomères diéniques respectivement de partie médiane et de partie latérale est le seul élastomère de la composition de caoutchouc respectivement de partie médiane et de partie latérale.

8. Pneumatique (1) selon l'une quelconque des revendications 1 à 6 **dans lequel** au moins une des compositions de caoutchouc médiane ou latérale comprend un second élastomère, de préférence diénique, de partie médiane ou de partie latérale.

9. Pneumatique (1) selon la revendication 8 **dans lequel** le second élastomère de partie médiane ou de partie latérale est un élastomère diénique fortement insaturé choisi dans le groupe constitué par les polybutadiènes, les polyisoprènes, les copolymères de butadiène, les copolymères d'isoprène et les mélanges de ces élastomères.

10. Pneumatique (1) selon l'une quelconque des revendications 1 à 9 **dans lequel** la charge renforçante d'au moins une des compositions de caoutchouc médiane ou latérale comprend un noir de carbone.

11. Pneumatique (1) selon la revendication 10 **dans lequel** la charge renforçante d'au moins une des compositions de caoutchouc médiane ou latérale comprend 100% en masse d'un noir de carbone.

12. Pneumatique (1) selon l'une quelconque des revendications 1 à 10 **dans lequel** la charge renforçante d'au moins une des compositions de caoutchouc médiane ou latérale comprend une charge inorganique, de préférence une silice.

13. Pneumatique (1) selon l'une quelconque des revendications 1 à 12 **dans lequel** la composition de caoutchouc médiane comprend un taux de charge renforçante de partie médiane au plus égale à 50 pce.

14. Pneumatique (1) selon l'une quelconque des revendications 1 à 13 **dans lequel** la composition de caoutchouc médiane comprend un taux de charge renforçante de partie médiane au moins égale à 20 pce, de préférence au moins égale à 25 pce.

15. Pneumatique (1) selon l'une quelconque des revendications 1 à 14 **dans lequel** au moins une des compositions de caoutchouc médiane ou latérale comprend 0 à 20 pce d'un plastifiant liquide.

16. Pneumatique (1) selon la revendication 15 **dans lequel** le taux de plastifiant liquide d'au moins une des compositions de caoutchouc médiane ou latérale est égal à 0.

17. Pneumatique (1) selon l'une quelconque des revendications 1 à 16 **dans lequel** les deux parties latérales (41, 42), positionnées axialement de part et d'autre de la partie médiane (3) ont des largeurs axiales (L_{S1}, L_{S2}) identiques et sont constituées par des compositions de caoutchouc latérales identiques.

18. Pneumatique (1) selon l'une quelconque des revendications 1 à 17, le pneumatique comprenant une armature de sommet (5) radialement intérieure à la bande de roulement (2), **dans lequel** le pneumatique (1) comprend une couche intercalaire (7) constituée par au moins une composition de caoutchouc en contact par une face radialement extérieure avec au moins la partie médiane (3) de la bande de roulement (2) et par une face radialement intérieure avec l'armature de sommet (5).

19. Pneumatique (1) selon la revendication 18 **dans lequel,** la couche intercalaire (7) est constituée par une composition de caoutchouc comprenant du caoutchouc naturel.

20. Pneumatique (1) selon la revendication 18 **dans lequel** la couche intercalaire (7) est constituée par une composition de caoutchouc comprenant une matrice élastomère, laquelle matrice élastomère contient un élastomère terpolymère d'éthylène, d'une α-oléfine et d'un diène non conjugué et contient au moins 10% en masse d'unité diénique.

21. Pneumatique (1) selon la revendication 18 **dans lequel** la couche intercalaire (7) est constituée par une composition de caoutchouc comprenant un élastomère comprenant des unités éthylène et des unités diéniques comportant une double liaison carbone-carbone, lesquelles unités sont distribuées statistiquement au sein de l'élastomère.

22. Pneumatique (1) selon la revendication 18 **dans lequel** la couche intercalaire (7) est constituée par un stratifié élastomère, comprenant, radialement de l'extérieur vers l'intérieur, n couches Ci, n étant un nombre entier supérieur ou égal à 2 et i étant un nombre entier allant de 1 à n, constituées chacune par une composition de caoutchouc diénique, la couche C1 comprenant un élastomère diénique E comprenant des unités éthylène et des unités diéniques, les unités diéniques représentant plus de 10% en masse des unités monomères de l'élastomère diénique E, la couche Cn comprenant de 50 à moins de 100 pce d'un élastomère diénique N ayant un taux massique d'unité diénique supérieur à 50%, le taux exprimé en pce d'élastomère diénique N étant plus élevé dans la couche Cn que dans la couche C1, le taux exprimé en pce d'élastomère diénique E étant plus élevé dans la couche C1 que dans la couche Cn, les couches Ci, pour les valeurs de i allant de 2 à n-1 avec n supérieur à 2, comprenant un élastomère diénique I choisi dans le groupe constitué par les homopolymères et les copolymères de diène présentant plus de 10% en masse d'unité diénique.

## Patentansprüche

1. Flugzeugreifen (1) mit einer Lauffläche (2) mit einer axialen Breite L, wobei die Lauffläche (2) Folgendes umfasst:
- einen mittleren Teil (3) mit einer axialen Breite L_{C}, die mindestens gleich 50 % und höchstens gleich 80 % der axialen Breite L der Lauffläche ist, der aus einer mittleren Kautschukzusammensetzung besteht,
- und zwei seitliche Teile (41, 42), die axial auf jeder Seite des mittleren Teils (3) positioniert sind, jeweils mit einer axialen Breite (L_{S1}, L_{S2}), die mindestens gleich 10 % und höchstens gleich 25 % der axialen Breite L der Lauffläche ist, die jeweils aus einer seitlichen Kautschukzusammensetzung bestehen,
**dadurch gekennzeichnet, dass** die mittlere Kautschukzusammensetzung mindestens 50 phe eines ersten Dienelastomers des mittleren Teils, höchstens 70 phe eines verstärkenden Füllstoffs des mittleren Teils und ein Vernetzungssystem umfasst, wobei es sich bei dem ersten Dienelastomer des mittleren Teils um ein Terpolymer aus Ethylen, einem α-Olefin und einem nicht konjugierten Dien handelt, und dass die seitliche Kautschukzusammensetzung jedes seitlichen Teils mindestens 50 phe eines ersten Dienelastomers des seitlichen Teils umfasst, einen Gehalt an verstärkendem Füllstoff des seitlichen Teils größer als der Gehalt an verstärkendem Füllstoff des mittleren Teils und ein Vernetzungssystem umfasst, wobei es sich bei dem ersten Dienelastomer des seitlichen Teils um ein Terpolymer aus Ethylen, einem α-Olefin und einem nicht konjugierten Dien handelt.

2. Reifen (1) nach Anspruch 1, wobei die mittlere Kautschukzusammensetzung mindestens 60 phe eines ersten Dienelastomers des mittleren Teils umfasst.

3. Reifen (1) nach Anspruch 1 oder 2, wobei mindestens eine seitliche Kautschukzusammensetzung mindestens 60 phe eines ersten Dienelastomers des seitlichen Teils umfasst.

4. Reifen (1) nach einem der Ansprüche 1 bis 3, wobei für mindestens eines der ersten Dienelastomere des mittleren Teils bzw. des seitlichen Teils das α-Olefin Propylen ist.

5. Reifen (1) nach einem der Ansprüche 1 bis 4, wobei für mindestens eines der ersten Dienelastomere des mittleren Teils bzw. des seitlichen Teils das nicht konjugierte Dien 5-Ethyliden-2-norbornen oder Dicyclopentadien ist.

6. Reifen (1) nach einem der Ansprüche 1 bis 5, wobei mindestens eines der ersten Dienelastomere des mittleren Teils bzw. des seitlichen Teils mindestens eines der folgenden Merkmale, vorzugsweise alle, aufweist:
- die Ethylen-Einheiten repräsentieren zwischen 20 und 90 %,
- die α-Olefin-Einheiten repräsentieren zwischen 10 und 80 %,
- die Einheiten von nicht konjugiertem Dien repräsentieren zwischen 0,5 und 20 % der Masse des ersten Dienelastomers.

7. Reifen (1) nach einem der Ansprüche 1 bis 6, wobei mindestens eines der ersten Dienelastomere des mittleren Teils bzw. des seitlichen Teils das einzige Elastomer der Kautschukzusammensetzung des mittleren Teils bzw. des seitlichen Teils ist.

8. Reifen (1) nach einem der Ansprüche 1 bis 6, wobei mindestens eine der mittleren oder seitlichen Kautschukzusammensetzungen ein zweites Elastomer, vorzugsweise ein Dienelastomer, des mittleren Teils oder des seitlichen Teils umfasst.

9. Reifen (1) nach Anspruch 8, wobei das zweite Elastomer des mittleren Teils oder des seitlichen Teils ein stark ungesättigtes Dienelastomer ist, das aus der Gruppe bestehend aus Polybutadienen, Polyisoprenen, Butadien-Copolymeren, Isopren-Copolymeren und Mischungen dieser Elastomere ausgewählt ist.

10. Reifen (1) nach einem der Ansprüche 1 bis 9, wobei der verstärkende Füllstoff mindestens einer der mittleren oder seitlichen Kautschukzusammensetzungen einen Ruß umfasst.

11. Reifen (1) nach Anspruch 10, wobei der verstärkende Füllstoff mindestens eine der mittleren oder seitlichen Kautschukzusammensetzungen 100 Massen-% eines Rußes umfasst.

12. Reifen (1) nach einem der Ansprüche 1 bis 10, wobei der verstärkende Füllstoff mindestens einer der mittleren oder seitlichen Kautschukzusammensetzungen einen anorganischen Füllstoff, vorzugsweise eine Kieselsäure, umfasst.

13. Reifen (1) nach einem der Ansprüche 1 bis 12, wobei die mittlere Kautschukzusammensetzung einen Gehalt an verstärkendem Füllstoff des mittleren Teils von höchstens gleich 50 phe umfasst.

14. Reifen (1) nach einem der Ansprüche 1 bis 13, wobei die Kautschukzusammensetzung des mittleren Teils einen Gehalt an verstärkendem Füllstoff des mittleren Teils von mindestens gleich 20 phe, vorzugsweise mindestens gleich 25 phe, umfasst.

15. Reifen (1) nach einem der Ansprüche 1 bis 14, wobei mindestens eine der mittleren oder seitlichen Kautschukzusammensetzungen 0 bis 20 phe eines flüssigen Weichmachers umfasst.

16. Reifen (1) nach Anspruch 15, wobei der Gehalt an flüssigem Weichmacher mindestens einer der mittleren oder seitlichen Kautschukzusammensetzungen gleich 0 ist.

17. Reifen (1) nach einem der Ansprüche 1 bis 16, wobei die beiden seitlichen Teile (41, 42), die axial auf jeder Seite des mittleren Teils (3) positioniert sind, gleiche axiale Breiten (L_{S1}, L_{S2}) aufweisen und aus den gleichen seitlichen Kautschukzusammensetzungen bestehen.

18. Reifen (1) nach einem der Ansprüche 1 bis 17, wobei der Reifen eine Scheitelbewehrung (5) radial innerhalb der Lauffläche (2) umfasst, wobei der Reifen (1) eine Zwischenschicht (7) umfasst, die aus mindestens einer Kautschukzusammensetzung besteht und über eine radial äußere Seite mit mindestens dem mittleren Teil (3) der Lauffläche (2) und über eine radial innere Seite mit der Scheitelbewehrung (5) in Kontakt steht.

19. Reifen (1) nach Anspruch 18, wobei die Zwischenschicht (7) aus einer Kautschukzusammensetzung besteht, die Naturkautschuk umfasst.

20. Reifen (1) nach Anspruch 18, wobei die Zwischenschicht (7) aus einer Kautschukzusammensetzung besteht, die eine Elastomermatrix umfasst, wobei die Elastomermatrix ein Terpolymer-Elastomer aus Ethylen, einem α-Olefinen einem nicht konjugierten Dien umfasst und mindestens 10 Massen-% Dien-Einheiten enthält.

21. Reifen (1) nach Anspruch 18, wobei die Zwischenschicht (7) aus einer Kautschukzusammensetzung besteht, die ein Elastomer umfasst, das Ethylen-Einheiten und Dien-Einheiten mit einer Kohlenstoff-Kohlenstoff-Doppelbindung, die statistisch in dem Elastomer verteilt sind, umfasst.

22. Reifen (1) nach Anspruch 18, wobei die Zwischenschicht (7) aus einem Elastomerlaminat besteht, das radial von außen nach innen n Schichten Ci umfasst, wobei n eine ganze Zahl größer oder gleich 2 ist und i eine ganze Zahl im Bereich von 1 bis n ist, die jeweils aus einer Dienkautschukzusammensetzung bestehen, wobei die Schicht C1 ein Dienelastomer E umfasst, das Ethylen-Einheiten und Dien-Einheiten umfasst, wobei die Dien-Einheiten mehr als 10 Massen-% der Monomereinheiten des Dienelastomers E ausmachen, wobei die Schicht Cn 50 bis weniger als 100 phe eines Dienelastomers N mit einem Massengehalt an Dien-Einheiten von mehr als 50 % umfasst, wobei der in phe ausgedrückte Gehalt an Dienelastomer N in der Schicht Cn höher ist als in der Schicht C1, wobei der in phe ausgedrückte Gehalt an Dienelastomer E in der Schicht C1 höher ist als in der Schicht Cn, wobei die Schichten Ci für die Werte von i im Bereich von 2 bis n-1 mit n größer als 2 ein Dienelastomer I umfassen, das aus der Gruppe bestehend aus Dien-Homopolymeren und -Copolymeren mit mehr als 10 Massen-% Dien-Einheiten ausgewählt ist.

## Claims

1. Aeroplane tyre (1) comprising a tread (2) having an axial width L, the tread (2) comprising:
- a middle part (3) having an axial width Lc at least equal to 50% and at most equal to 80% of the axial width L of the tread and composed of a middle rubber composition,
- and two lateral parts (41, 42) positioned axially on either side of the middle part (3), each having an axial width (Lsi, Ls2) at least equal to 10% and at most equal to 25% of the axial width L of the tread and each composed of a lateral rubber composition,
**characterized in that** the middle rubber composition comprises at least 50 phr of a first middle part diene elastomer, at most 70 phr of a middle part reinforcing filler and a crosslinking system, which first middle part diene elastomer is a terpolymer of ethylene, of an α-olefin and of a non-conjugated diene **and in that** the lateral rubber composition of each lateral part comprises at least 50 phr of a first lateral part diene elastomer, a lateral part reinforcing filler content greater than the middle part reinforcing filler content and a crosslinking system, which first lateral part diene elastomer is a terpolymer of ethylene, of an α-olefin and of a non-conjugated diene.

2. Tyre (1) according to Claim 1, **wherein** the middle rubber composition comprises at least 60 phr of a first middle part diene elastomer.

3. Tyre (1) according to either one of Claims 1 and 2, **wherein** at least one lateral rubber composition comprises at least 60 phr of a first lateral part diene elastomer.

4. Tyre (1) according to any one of Claims 1 to 3, **wherein,** for at least one of the first middle part and respectively lateral part diene elastomers, the α-olefin is propylene.

5. Tyre (1) according to any one of Claims 1 to 4, **wherein** for at least one of the first middle part and respectively lateral part diene elastomers, the non-conjugated diene is 5-ethylidene-2-norbornene or dicyclopentadiene.

6. Tyre (1) according to any one of Claims 1 to 5, **wherein** at least one of the first middle part and respectively lateral part diene elastomers has at least one, and preferably all, of the following characteristics:
- the ethylene units represent between 20 and 90%,
- the α-olefin units represent between 10 and 80%,
- the non-conjugated diene units represent between 0.5 and 20% by weight of the first diene elastomer.

7. Tyre (1) according to any one of Claims 1 to 6, **wherein** at least one of the first middle part and respectively lateral part diene elastomers is the only elastomer of the respectively middle part and lateral part rubber composition.

8. Tyre (1) according to any one of Claims 1 to 6, **wherein** at least one of the middle or lateral rubber compositions comprises a second middle part or lateral part elastomer, preferably a diene elastomer.

9. Tyre (1) according to Claim 8, **wherein** the second middle part or lateral part elastomer is a highly unsaturated diene elastomer selected from the group consisting of polybutadienes, polyisoprenes, butadiene copolymers, isoprene copolymers and the mixtures of these elastomers.

10. Tyre (1) according to any one of Claims 1 to 9, **wherein** the reinforcing filler of at least one of the middle or lateral rubber compositions comprises a carbon black.

11. Tyre (1) according to Claim 10, **wherein** the reinforcing filler of at least one of the middle or lateral rubber compositions comprises 100% by weight of a carbon black.

12. Tyre (1) according to any one of Claims 1 to 10, **wherein** the reinforcing filler of at least one of the middle or lateral rubber compositions comprises an inorganic filler, preferably a silica.

13. Tyre (1) according to any one of Claims 1 to 12, **wherein** the middle rubber composition comprises a content of middle part reinforcing filler at most equal to 50 phr.

14. Tyre (1) according to any one of Claims 1 to 13, **wherein** the middle rubber composition comprises a middle part reinforcing filler content at least equal to 20 phr, preferably at least equal to 25 phr.

15. Tyre (1) according to any one of Claims 1 to 14, **wherein** at least one of the middle or lateral rubber compositions comprises from 0 to 20 phr of a liquid plasticizer.

16. Tyre (1) according to Claim 15, **wherein** the content of liquid plasticizer of at least one of the middle or lateral rubber compositions is equal to 0.

17. Tyre (1) according to any one of Claims 1 to 16, **wherein** the two lateral parts (41, 42), positioned axially on either side of the middle part (3), have identical axial widths (L_{S1}, Ls2) and are composed of identical lateral rubber compositions.

18. Tyre (1) according to any one of Claims 1 to 17, the tyre comprising a crown reinforcement (5) radially inside the tread (2), **wherein** the tyre (1) comprises an interlayer (7) composed of at least one rubber composition, in contact by a radially outer face with at least the middle part (3) of the tread (2) and by a radially inner face with the crown reinforcement (5).

19. Tyre (1) according to Claim 18, **wherein** the interlayer (7) is composed of a rubber composition comprising natural rubber.

20. Tyre (1) according to Claim 18, **wherein** the interlayer (7) is composed of a rubber composition comprising an elastomer matrix, which elastomer matrix contains a terpolymeric elastomer of ethylene, of an α-olefin and of a non-conjugated diene and contains at least 10% by weight of diene units.

21. Tyre (1) according to Claim 18, **wherein** the interlayer (7) is composed of a rubber composition comprising an elastomer comprising ethylene units and diene units comprising a carbon-carbon double bond, which units are distributed randomly within the elastomer.

22. Tyre (1) according to Claim 18, **wherein** the interlayer (7) is composed of an elastomeric laminate comprising, radially from the outside to the inside, n layers Ci, n being an integer greater than or equal to 2 and i being an integer ranging from 1 to n, each composed of a diene rubber composition, the layer C1 comprising a diene elastomer E comprising ethylene units and diene units, the diene units representing more than 10% by weight of the monomer units of the diene elastomer E, the layer Cn comprising from 50 to less than 100 phr of a diene elastomer N having a content by weight of diene units of greater than 50%, the content expressed in phr of diene elastomer N being higher in the layer Cn than in the layer C1, the content expressed in phr of diene elastomer E being higher in the layer C1 than in the layer Cn, the layers Ci, for the values of i ranging from 2 to n-1, where n is greater than 2, comprising a diene elastomer I selected from the group consisting of diene homopolymers and copolymers having more than 10% by weight of diene units.
